# FASCICULE DE BREVET EUROPEEN

(11) **EP 2 255 595 B1**
(45) Date de publication et mention de la délivrance du brevet: **29.06.2016**
(21) Numéro de dépôt: 09729604.0
(22) Date de dépôt: 17.03.2009
(51) Int. Cl.: H05B 6/02, B29C 33/06, B29C 35/08, B29C 43/52

(54) **DISPOSITIF DE TRANSFORMATION DE MATERIAUX UTILISANT UN CHAUFFAGE PAR INDUCTION ET DES MOYENS DE COMPACTAGE DEFORMABLES**
VORRICHTUNG ZUR TRANSFORMATION VON MATERIALIEN MITTELS INDUKTIONSHEIZUNG UND VERFORMBARER VERDICHTUNGSMITTELN
DEVICE FOR CONVERTING MATERIALS USING INDUCTION HEATING AND DEFORMABLE COMPACTING MEANS

(30) Priorité: 17.03.2008 FR 0851728
(43) Date de publication de la demande: 01.12.2010
(73) Titulaire: Roctool, 73370 Le Bourget du Lac (FR)
(72) Inventeur: FEIGENBLUM, José, 38000 Grenoble (FR); GUICHARD, Alexandre, 73310 La Chapelle-du-Mont-du-Chat (FR)
(74) Mandataire: Ipside
(86) Numéro de dépôt international: PCT/FR2009/000280
(87) Numéro de publication internationale: WO 2009/125079

(56) Documents cités:
- WO-A-98/00274
- FR-A- 2 816 237
- FR-A- 2 890 588
- US-A- 5 641 422
- US-A1- 2005 035 115

## Description

La présente invention concerne un dispositif et un procédé utilisant un chauffage par induction et des moyens de pression déformables, notamment dans le but de réaliser la transformation ou le moulage de matériaux, en particulier de matériaux composites à matrice thermoplastique ou thermodurcissable.

Il est connu un dispositif, tel que celui décrit dans la demande internationale n° WO2005/094127, qui permet de localiser le chauffage par induction en surface, de manière à délimiter le chauffage à l'interface moule/matière.

Un tel dispositif comprend des inducteurs entourant deux corps de moule, réalisés en un matériau électriquement conducteur et comportant une zone chauffante destinée à être à proximité de, ou en contact avec le matériau à transformer, les corps de moule étant isolés électriquement l'un par rapport à l'autre. Ainsi, grâce à cette coupure électrique entre les deux corps de moule, les faces eh regard de ces derniers délimitent un entrefer dans lequel circule le champ magnétique créé par les inducteurs. Le champ magnétique induit alors des courants électriques en surface des corps de moule, et en particulier à la surface de la zone chauffante de chaque corps de moule, permettant ainsi de localiser le chauffage en surface.

Un tel dispositif permet une montée en température des zones chauffantes très rapide et très importante, étant donné que l'énergie générée par les inducteurs est injectée directement à la surface des zones chauffantes, dans une épaisseur très faible, typiquement quelques dixièmes de millimètre. Il nécessite cependant la fabrication de deux demi-moules répondant à des contraintes mécaniques et d'usinage strictes. Bien que performant, un tel dispositif s'avère donc coûteux.

D'autre part, un tel dispositif présente des performances limitées lorsque l'on souhaite réaliser des pièces géométriquement complexes, notamment celles présentant des formes non développables, et en particulier lorsque celles-ci présentent des surfaces perpendiculaires au plant de joint du moule, ou avec une faible dépouille. En effet, la pièce subit la pression exercée par le demi-moule supérieur (ou poinçon) sur le demi-moule inférieur (ou matrice). Pour cela, la zone moulante du poinçon présente une forme complémentaire de la zone moulante de la matrice, et le poinçon est mobile selon un axe perpendiculaire au plan de joint. Ce mouvement de translation permet d'exercer sur la pièce la pression requise pour les surfaces sensiblement parallèles au plan de joint du moule (i.e. perpendiculaires à la direction de déplacement du poinçon) ou faiblement inclinées par rapport à ce plan. En revanche, en raison de ce mouvement de translation unique, pour les surfaces verticales (i.e perpendiculaires au plan de joint) ou présentant un angle de dépouille faible, le poinçon n'est pas à même d'exercer une pression suffisante pour venir plaquer correctement la pièce sur la zone moulante de la matrice. Cela engendre donc des problèmes de qualité finale de la pièce réalisée (état de surface, résistance mécanique, imprégnation des fibres...)

La présente invention a pour but de pallier les inconvénients de l'art antérieur en proposant un dispositif de chauffage de matériau(x) permettant une montée en température très rapide et contrôlable avec une très grande précision, et permettant de réaliser des pièces géométriquement complexes avec la qualité requise. Ainsi, l'invention concerne un dispositif utilisant un chauffage par induction couplé à un entrefer et équipé de moyens de pression déformables.

Plus précisément, l'invention concerne un dispositif de chauffage pour la transformation d'un matériau **selon la revendication 1**.,

Ainsi, l'invention permet de limiter le chauffage par induction à une surface, afin de localiser le chauffage à l'interface moule/matière, ce qui permet de limiter la consommation d'énergie, et donc d'améliorer le rendement énergétique du dispositif, tout en assurant une pression uniformément répartie sur la pièce. En effet, les moyens de pression, ou de compactage, déformables, assurent une pression isobare sur la pièce indépendamment de la forme de la pièce. La productivité est également augmentée par rapport aux dispositifs connus utilisant des moyens de pression déformables, grâce à des temps de chauffe et de refroidissement diminués, une fraction très faible du volume du moule est soumise au chauffage par induction.

Dans une réalisation, les moyens de pression comprennent une membrane souple.

Dans une réalisation, la membrane souple est liée de manière étanche à la matrice, des moyens permettant de générer une dépression entre la membrane et la matrice.

Dans une réalisation, la membrane souple est liée de manière étanche au corps supérieur, des moyens permettant de générer une surpression entre la membrane et le corps supérieur.

Dans une réalisation, le dispositif comprend des moyens pour générer une dépression entre la membrane et la matrice et des moyens pour

Dans une réalisation, la membrane souple est liée de manière étanche au corps supérieur, des moyens permettant de générer une surpression entre la membrane et le corps supérieur.

Dans une réalisation, le dispositif comprend des moyens pour générer une dépression entre la membrane et la matrice et des moyens pour générer une surpression entre la membrane et le corps supérieur, ces moyens étant aptes à être actionnés simultanément ou successivement.

Dans une réalisation, le dispositif comprend deux membranes souples, la première étant une membrane à dépression, la deuxième étant une membrane à surpression.

Dans une réalisation, les moyens de pression sont solidaires du corps supérieur.

Dans une réalisation, les moyens de pression sont solidaires de la matrice.

Dans une réalisation, la zone moulante comprend un composé magnétique, de préférence de perméabilité magnétique relative et de résistivité électrique élevées, par exemple un acier à base de nickel, de chrome et/ou de titane.

Dans une réalisation, le reste de la matrice comprend un matériau différent de celui constituant la zone moulante, notamment une matériau amagnétique ou peu magnétique, par exemple un acier inoxydable.

Dans une réalisation, la matrice comprend un matériau magnétique, ses faces situées en regard des moyens inducteurs, à l'exception de la surface de la zone moulante, étant recouvertes d'une couche de blindage d'un matériau amagnétique empêchant la pénétration du champ magnétique dans la matrice.

Dans une réalisation, le corps supérieur comprend un matériau amagnétique, de préférence de faible résistivité électrique, tel que de l'aluminium.

Dans une réalisation, la zone moulante comprend un réseau de canaux de refroidissement.

Dans une réalisation, le corps supérieur comprend un réseau de canaux de refroidissement.

Dans une réalisation, la fréquence F du champ magnétique généré par les moyens inducteurs est au moins égale à 10 kHz et de préférence au plus égale à 100 kHz.

Dans une réalisation, les moyens inducteurs comprennent deux parties séparables, respectivement solidaires de la matrice et du corps supérieur.

Enfin, l'invention concerne également un procédé de fabrication d'une pièce mettant en oeuvre un dispositif tel que défini ci-dessus.

D'autres caractéristiques et avantages de l'invention apparaîtront avec la description faite ci-dessous, cette dernière étant effectuée à titre d'exemple non limitatif en faisant référence aux dessins ci-après sur lesquels:
- les figures 1 et 2 représentent un dispositif selon l'invention ;
- les figures 3 et 4 représentent une variante du dispositif précédent ;
- les figures 5a et 5b montrent deux dispositions différentes des inducteurs pour le dispositif de la figure 2, ces vues correspondant à des coupes simplifiées selon la ligne AA de la figure 2 ;
- La figure 6 représente une vue en coupe d'une variante du dispositif de la figure 1, la coupe étant réalisée selon une direction analogue aux figures 5a et 5B ;
- Les figures 7a et 7b représentent un détail du dispositif de la figure 6, respectivement dans deux configurations différentes.

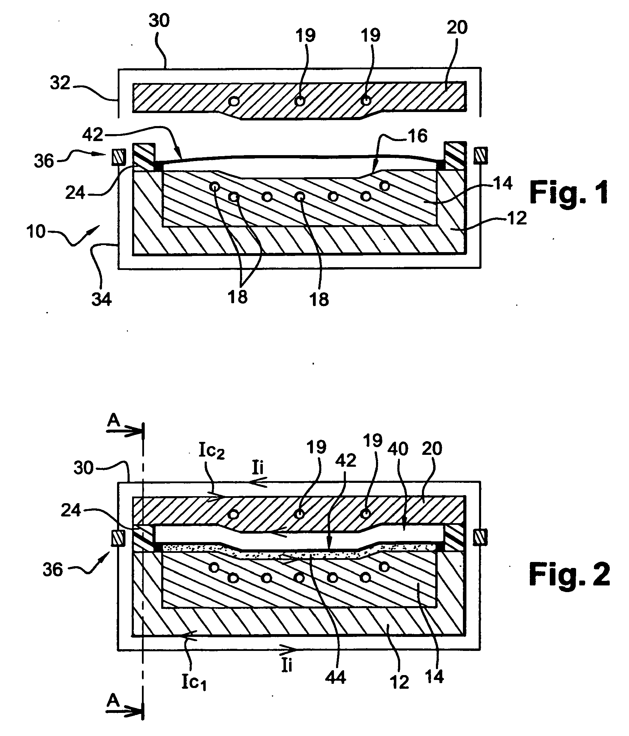

Le dispositif 10 représenté sur les figures 1 et 2 comporte un corps de moule 12, qui est un demi-moule inférieur, ou matrice. Ce corps de moule 12 est réalisé en un matériau électriquement conducteur, dont une partie 14 constitue une zone chauffante, ou zone moulante. En regard de la zone moulante 14, est disposé un corps supérieur 20 réalisé en un matériau électriquement conducteur et dépourvu de zone moulante. Le corps supérieur 20 est mobile par rapport à la matrice selon un axe vertical, perpendiculaire au plan de joint du moule. La fonction première du corps supérieur 20 est de servir de charge électroconductrice afin de former un entrefer entre la matrice 12 et le corps supérieur : il n'a aucune fonction directement liée à la phase de moulage d'un matériau. Ainsi, il n'est jamais directement en contact avec le matériau à mouler, n'exerce pas d'effort sur celui-ci, et, à la différence de la matrice 12, ne présente pas de zone moulante ou chauffante.

Entre la matrice 12 et le corps supérieur 20 est disposée une membrane étanche et souple 42, telle qu'une « bâche à vide », destinée à mettre un matériau à transformer 44 sous pression, afin de le plaquer contre la surface 16 de la zone moulante 14.

Un réseau d'inducteurs 30, électriquement reliés en parallèle ou en série et connectés à un générateur de courant, est disposé autour de l'ensemble formé par la matrice 12 et le corps supérieur 20. Chaque inducteur 30 comporte une spire conductrice et comprend deux parties 32, 34 séparables, La partie inférieure 34 est solidaire de la matrice 12, tandis que la partie supérieure 32 est solidaire du corps supérieur 20.

La figure 1 montre la matrice 12 et le corps supérieur 20 avant opération, éloignés l'un de l'autre pour permettre la mise en place du matériau à transformer.

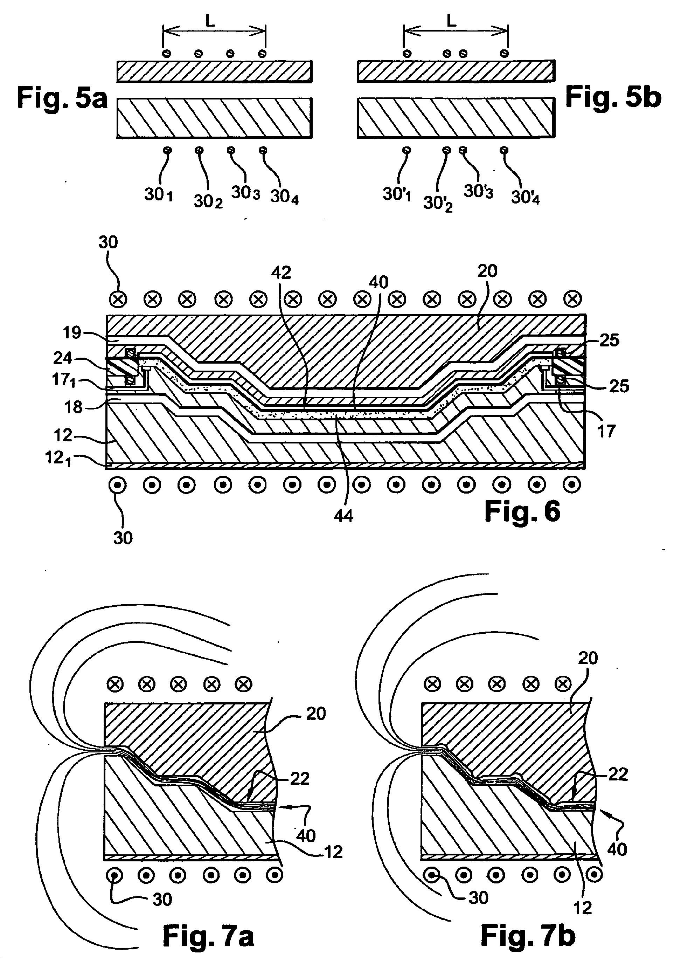

Après la mise en place d'un matériau 44, comme représenté sur la figure 2, le corps supérieur 20 est déplacé vers la matrice 12 de manière à délimiter un entrefer de dimensions appropriées. Dans l'exemple, on prévoit à cette fin des cales 24 électriquement isolantes (et donc transparentes au champ électromagnétique) entre le corps supérieur 20 et la matrice 12. Ces cales constituent une butée de référence pour le corps supérieur 20 (qui ne doit pas s'appuyer ou rentrer en contact avec le matériau 44), tout en assurant l'isolation électrique entre ce dernier et la matrice 12 qui est nécessaire au fonctionnement du dispositif. Ainsi la hauteur d'entrefer voulue est obtenue grâce à la hauteur appropriée des cales 24. On peut cependant envisager à la place toute solution alternative, par exemple un contact direct entre le corps supérieur et la matrice, l'un des deux étant revêtu d'un isolant électrique. Dans une variante, les cales 24 permettent également d'assurer l'étanchéité entre la membrane souple 42 et la matrice 12. Elles peuvent dans ce cas prendre la forme d'un cadre circonscrivant le périmètre de la zone de moulage. On pourra réaliser ce cadre dans tout matériau approprié, par exemple en céramique, thermodurcissable, thermoplastique, silicone, etc. En revanche, grâce à la présence des moyens de pression déformables qui seront réalisés dans un matériau électriquement isolant, la zone de moulage ne nécessite pas de précaution particulière, même dans le cas de la transformation de pièces en matériau électriquement conducteur (par exemple celles contenant des fibres de carbone.) Dans le cas où les cales 24 n'assurent pas l'étanchéité entre la matrice 12 et le corps supérieur 20, on prévoit des joints 25 s'appuyant de part et d'autre des cales 24, comme montré sur la figure 6. Dans une variante, l'étanchéité peut être assurée par la membrane 42 elle-même sans qu'il soit nécessaire de prévoir de joints supplémentaires.

Lors de la phase de transformation, comme montré sur la figure 2, le matériau 44 est enserré et maintenu sous pression contre la surface 16 de la zone moulante 14 de la matrice par la membrane 42, dans laquelle on fait le vide au moyen d'une pompe à vide (non représentée), la matrice comprenant dans ce but un réseau de canaux d'aspiration 17 (visible sur la figure 6). Le corps supérieur 20, non transparent au champ électromagnétique, permet que l'espace délimité par les surfaces en regard de la matrice 12 et du corps 20 constitue un entrefer 40, confinant ainsi la circulation d'un champ magnétique dans cet espace. Ainsi, lorsque les moyens inducteurs comprenant des spires conductrices 30 sont parcourus par des courants électriques li alternatifs de fréquence F, par exemple comprise entre 10 et 100 kilohertz, les inducteurs génèrent un champ magnétique qui enveloppe la matrice 12 et le corps 20.

Le champ magnétique ainsi généré traverse ces deux corps, et circule également dans l'entrefer, c'est-à-dire entre la matrice 12 et le corps supérieur 20. Le champ magnétique induit des courants de sens opposé aux sens des courants li, et la présence de l'entrefer permet de générer des courants induits Ic₁ et Ic₂ qui circulent respectivement à la surface de la matrice et du corps 20. Ces courants induits Ic₁ et Ic₂ ont donc une action thermique exclusivement à la surface de ces deux corps.

Le dispositif selon l'invention est d'autant plus efficace que la présence de l'entrefer 40 a pour effet de concentrer le flux magnétique en son sein, ce qui augmente encore l'action du champ magnétique au niveau des zones moulantes, et donc l'énergie inductive apportée à la surface des zones moulantes. On peut donc chauffer rapidement et localement la surface de la zone moulante 14, directement à l'interface zone moulante/matériau, et non dans l'épaisseur du corps de moule, ce qui représente une économie d'énergie importante, tout en réalisant une mise en pression adéquate de la pièce grâce à la membrane souple.

L'entrefer a également pour effet de limiter l'influence de la géométrie et/ou de la répartition des inducteurs sur le chauffage résultant car l'entrefer 40 a pour effet de répartir uniformément l'énergie apportée par les inducteurs. Ainsi des spires inductrices 30'₁ à 30'₄ (fig. 5b) réparties irrégulièrement sur une longueur L autour du moule ont pratiquement le même effet que le même nombre de spires inductrices 30₁ à 30₄ (fig. 5a) réparties régulièrement sur la même longueur. Cette disposition permet de choisir à volonté la répartition des spires inductrices. On rappelle qu'à l'opposé, une configuration classique avec un inducteur à spires et une charge électroconductrice sans entrefer, produit une répartition énergétique inégale, l'énergie injectée présentant un maximum au droit de chaque spire inductive. Cette possibilité d'avoir une répartition inégale des spires d'inducteurs s'avère particulièrement avantageuse car, dans le dispositif objet de l'invention, les spires inductrices entourent le moule, et celui-ci peut être équipé d'un certain nombre d'éléments dépassants, tels que des cales montantes, des éjecteurs, etc.

Outre une répartition idéale de l'énergie injectée, offrant donc une température uniforme à la surface de la zone moulante, la présence de l'entrefer permet également de réguler et piloter très finement cette température. Il est ainsi possible de contrôler très précisément la vitesse de montée en température (en °C/min.), ce qui est nécessaire pour certains matériaux qui nécessitent de respecter des vitesses de montée en température constantes.

Le dispositif selon l'invention présente également l'avantage de diminuer les coûts de conception et de fabrication d'un moule. En effet, le corps supérieur 20 peut être conçu en une pièce monobloc, obtenue par exemple par moulage ou forgeage, et ne nécessite pas d'état de surface particulier, et donc d'usinages coûteux, contrairement à la matrice 12 et plus particulièrement à la zone moulante 14. De plus, celui-ci n'est pas destiné à appliquer de pression sur le matériau à transformer, ce qui n'impose quasiment aucune contrainte quant à la résistance mécanique du corps 20 et laisse une grande liberté dans le choix des matériaux. Dans certains cas, le corps 20 sera en outre d'une épaisseur faible comparée à la matrice 12, ce qui réduit là encore le coût de fabrication du corps 20 et plus généralement du dispositif selon l'invention.

Un autre avantage de l'invention réside dans le fait que, le corps 20 n'étant pas destiné à être en contact directement, à chauffer, ou à exercer des efforts avec/sur le matériau à transformer, on garde une grande liberté dans la définition de sa forme : comme le corps 20 ne joue pas le rôle d'un contre-moule, la forme de sa surface 22 située en vis-à-vis de la zone moulante 14 peut être indépendante de la forme de la zone moulante (et donc de la pièce finale). Cette liberté dans la définition de la forme de cette surface 22 permet par exemple de moduler très finement la chauffe obtenue en jouant sur les phénomènes inductifs et résistifs. On peut, notamment, jouer sur la hauteur de l'entrefer pour limiter des sous chauffes ou des surchauffes. Par exemple, comme montré sur la figure 7b, diminuer localement la hauteur de l'entrefer, c'est-à-dire qu'à l'endroit concerné le corps supérieur 20 sera plus proche de la matrice 12 qu'à d'autres endroits, permet d'éviter une sous chauffe locale au niveau de la matrice, la réduction de l'entrefer permettant d'augmenter la concentration du flux magnétique traversant l'entrefer à cet endroit, et donc son effet. On peut ainsi voir, sur les figures 7a et 7b, la circulation du champ magnétique généré par les inducteurs 30, en particulier à l'intérieur de l'entrefer 40. La figure 7a montre un entrefer 40 d'épaisseur constante et l'on voit que lorsque celui-ci n'est pas rectiligne, les lignes de flux sont plus concentrées à l'intérieur de la courbe décrite par l'entrefer qu'à l'extérieur, du fait que le flux magnétique emprunte le chemin de moindre reluctance. Il se produit donc des surchauffes et des sous-chauffes à ces endroits courbes, respectivement à l'intérieur et à l'extérieur de la courbe. La figure 7b montre un entrefer 42 d'épaisseur non constante, en particulier d'épaisseur modifiée aux endroits où l'entrefer décrit une courbe. Selon les cas, une augmentation ou une diminution de cette épaisseur permet de corriger la répartition non homogène du flux magnétique constaté à la figure 7a.

Le matériau amagnétique utilisé pour constituer le corps 20 a, de préférence, une faible résistivité électrique, comme par exemple le cuivre ou l'aluminium. Cela permet d'éviter au maximum les pertes énergétiques. En effet, le corps 20 étant électriquement conducteur, il est parcouru par des courants induits par le champ magnétique, mais la quasi-totalité de l'énergie générée par les inducteurs est injectée dans la matrice. Par exemple, si le corps 20 est en aluminium, l'énergie qu'il reçoit représente environ 5% de l'énergie injectée dans la matrice 12.

Afin de minimiser les pertes d'énergie dans la matrice 12, la zone moulante 14 comprend un matériau magnétique présentant éventuellement un point de Curie, tandis que le reste de la matrice 12 comprend un composé amagnétique ou peu magnétique. Le matériau magnétique constituant la zone moulante 14 présente de préférence une résistivité électrique plus importante que celle du cuivre, comme par exemple des alliages d'acier à base de nickel, de chrome et/ou de titane. Une résistivité électrique importante de la zone moulante constitue un avantage car elle permet un chauffage par induction plus efficace. Cependant, il est à noter que la perméabilité magnétique du matériau influe également sur le rendement du chauffage par induction. Le reste de la matrice 12 comprend un matériau réalisant un bon compromis entre caractéristiques mécaniques et propriétés magnétiques et électriques. En effet, afin de limiter les pertes énergétiques et de concentrer toute l'action du chauffage au niveau de la surface 16 de la zone moulante 14, le matériau constituant la matrice 12 doit être aussi peu magnétique et résistif que possible, tout en présentant la résistance mécanique nécessaire aux efforts importants et répétés des phases de moulage. A ce titre, l'acier inoxydable et le cuivre représentent un compromis intéressant.

Dans une variante représentée à la figure 6, la matrice pourra être réalisée selon la méthode décrite dans la demande internationale n° 2007/031660, la matrice 12, ainsi que la zone moulante 14, étant constituée intégralement d'un matériau magnétique, les faces de celle-ci situées en regard des moyens inducteurs étant recouvertes d'une couche 12₁ de blindage en un matériau amagnétique tel que du cuivre, à l'exception de la surface 16 de la zone moulante 14. Dans cette configuration, le blindage est tel que son épaisseur est supérieure à la profondeur de pénétration du champ électromagnétique. Ainsi, les courants induits circulent dans la couche de blindage, provoquant peu d'échauffement et peu de pertes énergétiques, sauf à l'endroit de la surface de la zone moulante, où le matériau est très réactif au chauffage par induction.

Lorsque le matériau constituant la zone moulante 14 présente un point de Curie, à une température proche de ce point de Curie, le matériau perd ses propriétés magnétiques et le chauffage par induction diminue fortement, ce qui est une des possibilités pour réguler la température de chauffage autour du point de Curie.

Le dispositif représenté sur les figures 1 et 2 est pourvu d'un système de refroidissement pour permettre la réalisation ou la transformation de pièces par chauffage à cadence élevée, le refroidissement étant mis en oeuvre entre deux traitements. A cet effet, on prévoit dans la matrice 12 de la zone moulante 12, un réseau de canaux 18 permettant de faire circuler un liquide de refroidissement à proximité des surfaces moulantes. Le refroidissement ainsi obtenu est très performant, d'une part parce que le corps de moule métallique est thermiquement très conducteur, et d'autre part parce que les canaux peuvent être disposés au plus près de la surface 16 de la zone moulante 14. On réalise donc un refroidissement très performant car rapide et homogène sur l'ensemble de la pièce. Cette dernière particularité revêt une importance cruciale pour certains matériaux tels que le polyester, pour lesquels des problèmes de relâchement de contraintes se posent lors du refroidissement si la pièce n'est pas maintenue en forme pendant tout le temps du refroidissement (pièce vrillée, etc.) On supprime donc pour certains matériaux une étape entière de production, dite étape de conformage, nécessitant par exemple un châssis de maintien, une étuve pour une descente en température contrôlée, etc.

Le corps supérieur 20 est de préférence également pourvu d'un réseau de canaux de refroidissement 19, mais ce réseau est destiné principalement à refroidir le corps supérieur 20 lorsque celui-ci s'échauffe au fur et à mesure des cycles. En pratique, l'élévation de température du corps supérieur 20 sera plutôt lente et on pourra mettre en oeuvre le refroidissement en oeuvre périodiquement, après un certain nombre de cycles de chauffage.

Les inducteurs 30 sont en deux parties 32, 34 séparables et solidaires respectivement de la matrice 12 et du corps supérieur 20, ce qui permet une extraction rapide de la pièce 44 après moulage, et contribue donc à une fabrication à cadence élevée. Lors de la transformation d'un matériau, la continuité électrique entre les deux parties 32, 34 du réseau d'inducteurs est assurée par des contacteurs électriques 36.

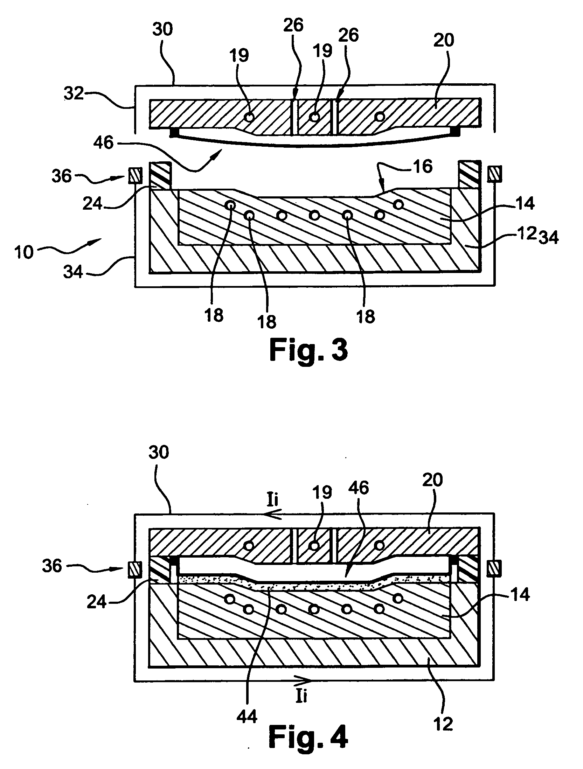

La figure 3 représente une variante de l'invention, dans laquelle la membrane souple est solidaire du corps supérieur 20 et non plus de la matrice 12. Dans cette configuration, la membrane souple est plaquée contre la matrice et la pièce à transformer par surpression, c'est-à-dire par gonflage. La membrane est dans ce but élastique et à même de supporter des pressions importantes, par exemple comprise entre 1 et 15 bars, permettant ainsi d'appliquer des efforts importants sur la pièce à transformer sans nécessiter l'utilisation de moyens mécaniques importants (presse, etc.) On peut également employer des baudruches gonflables qui présentent une forme adaptée à la zone moulante dans le cas de formes très complexes. Dans cette configuration, le corps supérieur 20 présente des canaux 26 permettant de mettre en communication l'espace compris entre la membrane 46 et la surface 22 du corps 20 avec une source de pression (non représentée). Afin de favoriser un refroidissement rapide tout en maintenant une pression sur la pièce, on pourra envisager que la source de pression permette de générer une circulation d'air à la pression désirée à l'intérieur de la membrane. On pourra par exemple à cet effet réaliser un canal d'entrée et un canal de sortie de l'air, ce dernier étant équipé d'un limiteur de pression taré à la pression minimale désirée, tandis que la source de pression fournit un air à une pression significativement plus élevée.

Pour réaliser la membrane 46, on pourra utiliser par exemple des matériaux tels que le silicone, ou des thermoplastiques supportant une déformation relative de 100% ou plus. De préférence, le matériau utilisé devra supporter des températures de l'ordre de 300°C.

Si l'on souhaite mettre en oeuvre des procédés avec transfert de résine, de type RTM, on pourra prévoir un réseau de canaux d'entrée 17₁ de la résine, comme montré sur la figure 6, le réseau de canaux d'aspiration 17 servant dans ce cas également à évacuer la résine. Les canaux d'entrée et de sortie de résine seront disposés de manière à favoriser un remplissage et une répartition de la résine optimaux. Dans l'exemple de la figure 6, ceux-ci sont situés sur des côtés opposés de la matrice 12.

Dans une variante, on pourra utiliser deux moyens de compactage en combinaison : une membrane gonflable disposée sur le corps supérieur 20 avec une membrane à dépression disposée sur la matrice 12. Une telle configuration sera notamment utile pour contrôler le niveau de porosité de la pièce finie. En effet, on faisant le vide sous la membrane à dépression avant d'exercer une pression importante avec la membrane gonflable, on pourra exercer des efforts importants sur la pièce tout en évitant que de l'air s'infiltre dans celle-ci. Dans ce même but, on pourra également utiliser une membrane unique, réalisée dans un matériau unique ou comprenant au moins deux couches de deux matériaux différents, cette membrane unique étant soumise à la fois à une dépression et à une surpression.

Dans une variante, on pourra prévoir de fixer la membrane à dépression 42 sur le corps supérieur 20. Ainsi la mise en place et l'enlèvement de la membrane 42 sont simplifiés, son déplacement étant lié à celui du corps 20.

De façon classique, des moyens mécaniques (non représentés) d'éjection de la pièce fabriquée sont également prévus.

## Revendications

1. Dispositif (10) de chauffage pour la transformation d'un matériau (44), comprenant :
- un corps de moule inférieur (12), ou matrice, réalisé en un matériau électriquement conducteur et comportant une zone moulante (14) en matériau magnétique destinée à être en contact avec le matériau à transformer ;
- un corps supérieur (20) dépourvu de zone moulante, réalisé en un matériau électriquement conducteur amagnétique de faible résistivité électrique ;
- des moyens inducteurs (30) pour générer un champ magnétique enveloppant la matrice (12) et le corps supérieur (20) ;
- des moyens de pression déformables (42, 46), disposés entre la matrice (12) et le corps supérieur (20), aptes à exercer une pression uniforme sur le matériau à transformer, pour le plaquer contre la zone moulante
- **caractérisé en ce qu'**il comporte des cales (24) électriquement isolantes et transparentes au champ magnétique, disposées entre la matrice et le corps supérieur de manière à ménager un entrefer entre les faces en regard de ladite matrice et dudit corps supérieur, ledit entrefer étant maintenu pendant le chauffage et la transformation du matériau à transformer , le champ magnétique circulant dans l'entrefer induisant des courants à la surface de la zone moulante (14) de la matrice (12), permettant ainsi de localiser l'action des inducteurs à l'interface zone moulante/matériau à transformer

2. Dispositif selon la revendication 1, dans lequel les cales isolantes (24) assurent en outre l'étanchéité entre les moyens de pression déformables d'une part, et, d'autre part, la matrice (12) et/ou le corps supérieur (20).

3. Dispositif selon la revendication 1 ou 2, dans lequel les moyens de pression comprennent une membrane souple (42, 46).

4. Dispositif selon la revendication 3, dans lequel la membrane souple (42) est liée de manière étanche à la matrice (12), des moyens permettant de générer une dépression entre la membrane (42) et la matrice (12).

5. Dispositif selon la revendication 4, dans lequel la membrane souple (46) est liée de manière étanche au corps supérieur (20), des moyens permettant de générer une surpression entre la membrane (46) et le corps supérieur (20).

6. Dispositif selon les revendications 4 et 5, comprenant des moyens pour générer une dépression entre la membrane (42, 46) et la matrice (12) et des moyens pour générer une surpression entre la membrane (42, 46) et le corps supérieur (20), ces moyens étant aptes à être actionnés simultanément ou successivement.

7. Dispositif selon les revendications 4 et 5, comprenant deux membranes souples (42, 46), la première étant une membrane à dépression, la deuxième étant une membrane à surpression.

8. Dispositif selon l'une des revendications 1 à 7, dans lequel les moyens de pression sont solidaires du corps supérieur (20).

9. Dispositif selon l'une des revendications 1 à 8, dans lequel les moyens de pression sont solidaires de la matrice (12).

10. Dispositif selon l'une des revendications précédentes, dans lequel la zone moulante (14) comprend un composé magnétique, de préférence de perméabilité magnétique relative et de résistivité électriques élevées, par exemple un acier à base de nickel, de chrome et/ou de titane.

11. Dispositif selon la revendication 10, dans lequel le reste de la matrice (12) comprend un matériau différent de celui constituant la zone moulante (14), notamment un matériau amagnétique ou peu magnétique, par exemple un acier inoxydable.

12. Dispositif selon l'une des revendications 1 à 10, dans lequel la matrice (12) comprend un matériau magnétique, ses faces situées en regard des moyens inducteurs, à l'exception de la surface (16) de la zone moulante (14), étant recouvertes d'une couche de blindage d'un matériau amagnétique empêchant la pénétration du champ magnétique dans la matrice (12).

13. Dispositif selon l'une des revendications précédentes, dans lequel le corps supérieur (20) comprend un matériau amagnétique, de préférence de faible résistivité électrique, tel que de l'aluminium.

14. Dispositif selon l'une des revendications précédentes, dans lequel la zone moulante (14) comprend un réseau de canaux (18) de refroidissement.

15. Dispositif selon l'une des revendications précédentes, dans lequel le corps supérieur (20) comprend un réseau de canaux (19) de refroidissement.

16. Dispositif selon une des revendications précédentes dans lequel la fréquence F du champ magnétique généré par les moyens inducteurs est au moins égale à 10 kHz et de préférence au plus égale à 100 kHz.

17. Dispositif selon l'une des revendications précédentes, dans lequel les moyens inducteurs (30) comprennent deux parties séparables (32,34), respectivement solidaires de la matrice (12) et du corps supérieur (20).

## Patentansprüche

1. Heizungseinrichtung (10) für die Stoffumwandlung eines Materials (44) bestehend aus:
- einer unteren Formbackenhälfte (12) oder einer Matrize hergestellt aus dem elektrisch leitfähigen Material und bestehend aus einer Formungszone (14) aus magnetischem Material, die für den Kontakt mit dem zu verarbeitenden Material bestimmt wird;
- einer oberen Formbackenhälfte (20) ohne Formungszone, die aus dem elektrisch leitfähigen nichtmagnetischen Material mit geringem elektrischen Widerstand hergestellt ist;
- Induktionseinrichtung (30) zur Erzeugung eines Magnetfeldes um die Matrize (12) und die obere Formbackenhälfte (20) herum;
- verformbarer Druckmittel (42, 46), die sich zwischen der Matrize (12) und der oberen Formbackenhälfte (20) befinden, und imstande sind, gleichmäßigen Druck auf das umzuwandelnde Material auszuüben und es gegen die Formungszone zu drücken,
- **dadurch gekennzeichnet, dass** sie die für das Magnetfeld elektrisch isolierenden und transparenten Abstandshalter (24) enthält, die zwischen der Matrize und der oberen Formbackenhälfte zur Verschaffung eines Luftspaltes zwischen den Stirnflächen der genannten Matrize und der genannten oberen Formbackenhälfte eingelegt werden, wobei der Luftspalt während der Erwärmung und der Verarbeitung des umzuwandelnden Materials aufrechterhalten wird, und wobei das in den Luftspalt fließende Magnetfeld Ströme auf der Oberfläche der Formungszone (14) der Matrize (12) induziert, wodurch die Lokalisierung der Induktionseinwirkung an die Schnittstelle zwischen der Formungszone und dem zu verarbeitenden Material gestattet wird.

2. Vorrichtung nach Anspruch 1 **dadurch gekennzeichnet, dass** die isolierenden Abstandshalter (24) eine zusätzliche Abdichtung zwischen den verformbaren Druckmitteln einerseits und der Form (12) und/oder der oberen Formbackenhälfte andererseits (20) sicherstellen.

3. Vorrichtung nach Anspruch 1 oder 2 **dadurch gekennzeichnet, dass** die Druckmittel eine flexible Membrane (42, 46) einschließen.

4. Vorrichtung nach Anspruch 3 **dadurch gekennzeichnet, dass** die flexible Membrane (42) mit der Matrize (12) zu deren Abdichtung dichtschließend verbunden ist, und Mittel zur Vakuumerzeugung zwischen der Membrane (42) und der Matrize (12) beinhaltet.

5. Vorrichtung nach Anspruch 4 **dadurch gekennzeichnet, dass** die flexible Membrane (46) mit der oberen Formbackenhälfte (20) dichtschließend angeschlossen ist, und Mittel zur Vakuumerzeugung zwischen der Membrane (46) und der oberen Formbackenhälfte (20) beinhaltet.

6. Vorrichtung nach Ansprüchen 4 und 5 **gekennzeichnet dadurch, dass** sie Mittel zur Vakuumerzeugung zwischen der Membrane (42, 46) und der Matrize (12) und Mittel zur Hochdruckerzeugung zwischen der Membrane (42, 46) und der oberen Formbackenhälfte (20) beinhaltet, wobei diese Mittel gleichzeitig oder nacheinander funktionsfähig sind.

7. Vorrichtung nach Ansprüchen 4 und 5 **dadurch gekennzeichnet, dass** sie zwei flexible Membranen (42, 46) hat, wobei die erste eine Muldenmembrane und die zweite eine Hochdruck-Membrane ist.

8. Vorrichtung nach einem der Ansprüche 1 bis 7 **dadurch gekennzeichnet, dass** die Druckmittel auf der oberen Formbackenhälfte (20) befestigt sind.

9. Vorrichtung nach einem der Ansprüche 1 bis 8 **dadurch gekennzeichnet, dass** die Druckmittel mit der Matrize (12) zu einem Ganzen verbunden sind.

10. Vorrichtung nach einem der vorhergehenden Ansprüche **dadurch gekennzeichnet, dass** die Formungszone (14) einen magnetischen Körper, vorzugsweise mit der relativen magnetischen Permeabilität und dem hohen elektrischen Widerstand, beispielsweise, aus Stahl mit Nickel, Chrom und/oder Titanlegierung enthält.

11. Vorrichtung nach Anspruch 10 **dadurch gekennzeichnet, dass** der Rest der Matrize (12) aus dem Material besteht, das sich von dem die Formungszone (14) bildenden Material, insbesondere einem nichtmagnetischen oder schwach magnetischen Material, beispielsweise Edelstahl unterscheidet.

12. Vorrichtung nach einem der Ansprüche 1 bis 10 **dadurch gekennzeichnet, dass** die Matrize (12) ein magnetisches Material enthält, dessen Stirnflächen sich gegenüber der Induktionseinrichtung mit Ausnahme der Fläche (16) zur Formungszone (14) befinden, wobei sie mit einer Abschirmungsschicht aus einem nichtmagnetischen Material zur Eindrang-Verhinderung des magnetischen Feldes in die Matrize bedeckt ist.

13. Vorrichtung nach einem der vorhergehenden Ansprüche **dadurch gekennzeichnet, dass** die obere Formbackenhälfte (20) ein nichtmagnetisches Material, vorzugsweise mit dem niedrigen elektrischen Widerstand, wie beispielsweise Aluminium, aufweist.

14. Vorrichtung nach einem der vorhergehenden Ansprüche **dadurch gekennzeichnet, dass** die Formungszone (14) ein Netzwerk von Kanälen (18) zur Kühlung aufweist.

15. Vorrichtung nach einem der vorhergehenden Ansprüche **dadurch gekennzeichnet, dass** die obere Formbackenhälfte (20) ein Netzwerk von Kanälen (19) zur Kühlung aufweist.

16. Vorrichtung nach einem der vorhergehenden Ansprüche **dadurch gekennzeichnet, dass** die von der Induktionseinrichtung erzeugte Frequenz F des Magnetfelds am mindestens 10 kHz und vorzugsweise maximal 100 kHz gleich ist.

17. Vorrichtung nach einem der vorhergehenden Ansprüche **dadurch gekennzeichnet, dass** die Induktionseinrichtung (30) zwei trennbare Teile (32, 34) enthält, die jeweils mit der Matrize (12) und der oberen Formbackenhälfte (20) verbunden sind.

## Claims

1. Heating device (10) for the conversion of a material (44), comprising:
- a lower mold body (12), or matrix, made of an electrically conductive material and comprising a molding zone (14) of magnetic material intended to be in contact with the material to be processed;
- an upper body (20) devoid of molding zone, made of an electrically conductive non-magnetic material of low electrical resistivity;
- inductor means (30) for generating a magnetic field enveloping the matrix (12) and the upper body (20);
- deformable means of pressure (42, 46) placed between the matrix (12) and the upper body (20) able to exert a uniform pressure on the material to be transformed, to press it against the molding zone
- **characterized in that** it comprises spacers (24) electrically insulating and transparent to the magnetic field, placed between the matrix and the upper body so as to provide an air gap between the faces of said matrix and said upper body, said air gap being maintained during heating and processing of the material to be transformed, the magnetic field flowing in the air gap induces currents on the surface of the molding zone (14) of the matrix (12), thereby allowing localization of the inductors' action at the interface between the molding zone and the material to process.

2. Device according to claim 1, wherein the insulating spacers (24) further provide additional sealing between the pressure-deformable means on the one hand, and, on the other hand, the mold (12) and / or the upper body (20).

3. Device according to claim 1 or 2, wherein the pressure means comprise a flexible membrane (42, 46).

4. Device according to claim 3, wherein the flexible membrane (42) is connected in sealed manner to the matrix (12) to seal it and comprising means for generating a vacuum between the membrane (42) and the matrix (12).

5. Device according to claim 4, wherein the flexible membrane (46) is connected in sealed manner to the upper body (20) and comprising means for generating a high pressure between the membrane (46) and the upper body (20).

6. Device according to claims 4 and 5, comprising means for generating a vacuum between the membrane (42, 46) and the matrix (12) and means for generating high pressure between the membrane (42, 46) and the upper body (20), these means being capable of acting simultaneously or successively.

7. Device according to claims 4 and 5 comprising two flexible membranes (42, 46), the first being a depression membrane, the second being a high pressure membrane.

8. Device according to one of claims 1 to 7, wherein the pressure means are secured to the upper body (20).

9. Device according to one of claims 1 to 8, wherein the pressure means are integral with the matrix (12).

10. Device according to one of the preceding claims, wherein the molding zone (14) comprises a magnetic compound, preferably of relative magnetic permeability and high electrical resistivity, for example steel with a nickel, chromium and / or titanium base.

11. Device according to claim 10, wherein the rest of the matrix (12) comprises a material different from that constituting the molding zone (14), particularly a non-magnetic or slightly magnetic material, for example stainless steel.

12. Device according to one of claims 1 to 10, wherein the matrix (12) comprises a magnetic material, the faces situated opposite the inductor means, with the exception of the surface (16) of the molding zone (14), being covered with a shield layer of a nonmagnetic material preventing the penetration of the magnetic field into the matrix (12).

13. Device according to one of the preceding claims, wherein the upper body (20) comprises a non-magnetic material, preferably of low electrical resistivity, such as aluminum.

14. Device according to one of the preceding claims, wherein the molding zone (14) comprises a network of channels (18) for cooling.

15. Device according to one of the preceding claims, wherein the upper body (20) comprises a network of channels (19) for cooling.

16. Device according to one of the preceding claims wherein the frequency F of the magnetic field generated by the induction means is equal to at least 10 kHz and preferably equal to 100 kHz at most.

17. Device according to one of the preceding claims, wherein the inductor means (30) comprises two separable parts (32, 34) respectively connected with the matrix (12) and the upper body (20).
